(19) Europäisches Patentamt / European Patent Office / Office européen des brevets

(11) **EP 4 249 529 A1**

(12) # EUROPEAN PATENT APPLICATION

(43) Date of publication:
**27.09.2023 Bulletin 2023/39**

(21) Application number: **23163681.2**

(22) Date of filing: **23.03.2023**

(51) International Patent Classification (IPC):
**C08F 110/02** (2006.01)   **C08F 210/16** (2006.01)

(52) Cooperative Patent Classification (CPC):
(C-Sets available)
**C08F 110/02; C08F 210/16;** C08F 2410/06   (Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **24.03.2022 JP 2022048648**

(71) Applicant: **Asahi Kasei Kabushiki Kaisha
Tokyo 1000006 (JP)**

(72) Inventors:
• **ISHIKAWA, Masahiko
Tokyo, 1000006 (JP)**
• **TANAKA, Kenya
Tokyo, 1000006 (JP)**

(74) Representative: **D Young & Co LLP
120 Holborn
London EC1N 2DY (GB)**

(54) **POLYETHYLENE POWDER AND MOLDED BODY**

(57)   Provided are a polyethylene powder that is excellent in fluidity and fillability, and a high-quality molded body with few defects and high mechanical strength. In the polyethylene powder, a volume fraction of particles having a particle size of 100 $\mu$m or less measured by laser diffraction is 5 to 250, and a specific surface area by an air permeation method is 500 $cm^2$/g to 1000 $cm^2$/g.

EP 4 249 529 A1

**(Cont. next page)**

(52) Cooperative Patent Classification (CPC): (Cont.)

C-Sets
**C08F 10/02, C08F 4/6565;**
**C08F 10/02, C08F 4/6567;**
**C08F 210/16, C08F 2/001;**
C08F 110/02, C08F 2500/24;
C08F 210/16, C08F 210/08, C08F 2500/24

**Description**

Technical Field

The present invention relates to a polyethylene powder and a molded body.

Background Art

High-molecular-weight polyethylene is used in various fields as an engineering plastic because of its excellent impact resistance and abrasion resistance, as well as its self-lubricating properties. It is also used as a starting material for various molded bodies such as films, sheets, microporous membranes, fibers, foams, and pipes.

In particular, ultra-high molecular weight polyethylene having a molecular weight of 1,000,000 or more has higher mechanical strength, and thus is excellent in slidability and abrasion resistance, as well as chemical stability and long-term reliability.

However, ultra-high molecular weight polyethylene has low fluidity when melted at a temperature above its melting point, making it difficult to apply the melt molding method. When obtaining a molded body using ultra-high molecular weight polyethylene, there have been applied a compression molding method in which polyethylene powder is subjected to compression molding under heating and then cut, or a forming method in which the polyethylene powder is dissolved in a solvent such as liquid paraffin, stretched, and then formed into a sheet or thread by removing the solvent.

When molding powdery ultra-high molecular weight polyethylene, powder has a larger surface area for the entire aggregate, and individual particles can have various shapes, or individual particles can have various surface shapes, as compared with pellets, making it difficult to control the fluidity of the aggregate as a whole, and difficult to fill into the mold. Therefore, a method for uniformly filling into the mold has been investigated.

Furthermore, ultra-high molecular weight polyethylene is used as a material for producing a sintered molded body by a sintering molding method.

In the sintered molded body, the ultra-high molecular weight polyethylene powder is three-dimensionally connected by fusion to form a porous structure with voids.

From the viewpoint of ease of control of the porosity and pore size, chemical stability, strength, rigidity, and cushioning properties for the porous structure, a porous sheet made of the sintered molded body is used as, for example, a battery separator, an adsorption cushioning material attached to an adsorption stage for adsorption fixing or adsorption transportation, a ventilation member, and a sliding member.

In these applications, however, it is difficult to control the fluidity of the ultra-high molecular weight polyethylene powder, causing the problem of impairing the fillability into the mold and impairing the uniformity of the sintered molded body.

In view of the above-described problems, Japanese Patent Laid-Open No. 2015-120784 discloses a technique for producing polyethylene powder having a small BET specific surface area and a small unevenness by adjusting the conditions for synthesizing a catalyst.

Further, International Publication No. WO 2020/171017 discloses a technique for producing the polyethylene powder in which a uniquely defined powder spread parameter is adjusted, the occurrence of void defects is suppressed, and the non-defective rate is improved by subjecting polyethylene powder to a special heat treatment.

Furthermore, Japanese Patent Laid-Open No. 2019-38931 discloses a technique for producing polyethylene powder with improved fluidity by setting the proportion of particles with a high degree of circularity to 70% or more.

Furthermore, International Publication No. WO 2008/013144 discloses a technique for obtaining a high-performance filter with a pore size that is moderately small and uniform within the range of industrial use when formed into a molded product such as a sintered filter by using a specific catalyst to control the particle sphericity and particle surface smoothness of the high-molecular-weight polyethylene powder and making it spherical and smooth.

Summary of Invention

Problems to be Solved by Invention

However, in recent years, there has been a demand for a polyethylene powder that has excellent fluidity and fillability, good molding processability, few defects when formed into a molded body, and provides a high-strength and high-quality molded body. The above described conventionally disclosed polyethylene powder is still problematic in that there is still room for improvement from the viewpoint of molding processability and the quality of molded bodies.

In view of the above described problem of the prior art, an object of the present invention is to provide a polyethylene powder having excellent fluidity and fillability, and a high-quality molded body.

Means for Solving Problems

As a result of intensive investigation in order to solve the above problem, the present inventor has found that the above problem can be solved by the polyethylene powder in which a volume fraction of fine particles and a specific surface area determined by an air permeation method are each within a predetermined range, and has completed the present invention.

That is, the present invention is as follows.

[1] A polyethylene powder, wherein

a volume fraction of particles having a particle size of 100 $\mu$m or less measured by laser diffraction is 5 to 25%, and a specific surface area by an air permeation method is 500 cm$^2$/g to 1000 cm$^2$/g.

[2] The polyethylene powder according to [1], wherein a viscosity average molecular weight is 100,000 to 10,000,000.

[3] The polyethylene powder according to [1] or [2], wherein a total content of Al, Ti, and Mg is 1 ppm to 50 ppm.

[4] The polyethylene powder according to any one of [1] to [3], wherein a porosity is 30% to 45%.

[5] The polyethylene powder according to any one of [1] to [4], wherein an average particle size is 100 $\mu$m to 300 $\mu$m.

[6] A molded body of the polyethylene powder according to any one of [1] to [5].

Advantages of Invention

The present invention can provide a polyethylene powder that is excellent in fluidity and fillability, and a high-quality molded body with few defects and high mechanical strength.

Mode for Carrying Out Invention

Hereinafter, the mode for carrying out the present invention (hereinafter referred to as "the present embodiment") will be described in detail.

In the meantime, the following embodiment is examples for describing the present invention, and is not intended to limit the present invention to the following contents. The present invention can be variously modified and implemented within the scope of the gist thereof.

[Polyethylene powder]

The polyethylene powder of the present embodiment is a powder in which a volume fraction of particles having a particle size of 100 $\mu$m or less measured by laser diffraction is 5 to 25%, and a specific surface area by an air permeation method is 500 cm$^2$/g to 1000 cm$^2$/g.

The present embodiment can provide a polyethylene powder that is excellent in fluidity and fillability, and a high-quality molded body with few defects and high mechanical strength by satisfying the above requirements.

Hereinafter, the polyethylene powder of the present embodiment will be described in detail.

The polyethylene constituting the polyethylene powder of the present embodiment is not limited to the following, and suitable examples thereof include an ethylene homopolymer and a copolymer of ethylene and other comonomers.

Other comonomers include, but are not particularly limited to, $\alpha$-olefins, vinyl compounds, and the like.

The $\alpha$-olefins are not limited to the following, and examples thereof include $\alpha$-olefins having 3 to 20 carbon atoms. Specific examples thereof include propylene, 1-butene, 4-methyl-1-pentene, 1-hexene, 1-octene, 1-nonene, 1-decene, 1-undecene, 1-dodecene, 1-tridecene, and 1-tetradecene.

Examples of the vinyl compound include, but are not limited to, vinylcyclohexane, styrene, and derivatives thereof.

In addition, a non-conjugated polyene such as 1,5-hexadiene and 1,7-octadiene can be used as other comonomers, as necessary.

When the polyethylene powder of the present embodiment is a copolymer, the copolymer may be a ternary random polymer.

Other comonomers may be used singly or may be used in combination of two or more thereof.

The amount of other comonomers, in molar ratio, is preferably less than 0.5 mol, more preferably less than 0.4 mol, still more preferably less than 0.3 mol, relative to 100 mol of ethylene monomer, from the viewpoint of rigidity and heat resistance for polyethylene powder. The comonomer amount of polyethylene can be confirmed by an infrared analysis method, an NMR method, or the like.

(Volume fraction of particles having a particle size of 100 $\mu$m or less)

In the polyethylene powder of the present embodiment, a volume fraction of particles having a particle size of 100 $\mu$m or less measured by laser diffraction is 5 to 25%, preferably 8 to 20%, more preferably 10 to 18%.

The volume fraction of particles having a particle size of 100 $\mu$m or less measured by laser diffraction being 5% or more tends to improve the fluidity and fillability of the polyethylene powder.

In addition, the volume fraction of particles having a particle size of 100 $\mu$m or less measured by laser diffraction being 25% or less allows to increase the strength of the molded body and to increase the air permeability of the porous sintered body.

The volume fraction of particles having a particle size of 100 $\mu$m or less measured by laser diffraction can be controlled within the above numerical range by appropriately adjusting the polymerization conditions of polyethylene, the catalyst to be used, and the like, which will be described later. Specifically, the volume fraction of particles having a particle size of 100 $\mu$m or less can be controlled within the above numerical range by preparing the catalyst used in the polymerization of polyethylene under conditions that increase the particle size, or by removing the catalyst with a small particle size after preparing the catalyst. In addition, such a control is possible by adjusting the conditions in polymerizing polyethylene. For example, lowering the polymerization pressure or lowering the reaction temperature can control the volume fraction of particles having a particle size of 100 $\mu$m or less within the above numerical range.

The volume fraction of particles having a particle size of 100 $\mu$m or less measured by laser diffraction can be measured by the method described in examples below.

(Specific surface area by air permeation method)

As a method for improving the fluidity of polyethylene powder, there is used a method of reducing the specific surface area such as the BET method, or a method of performing evaluation by image analysis of a two-dimensional image obtained by projecting particles.

However, measurement of the specific surface area by the BET method includes a disturbance factor, that is, the voids of the particles, which do not affect the fluidity of the polyethylene powder. In addition, the evaluation by image analysis of two-dimensional images is problematic in that the dents on the surface of the polyethylene powder are not reflected.

The present inventors paid attention to the method of measuring the specific surface area by the air permeation method from the viewpoint of the determination method. The method of measuring the specific surface area by the air permeation method is "a method of determining the specific surface area of particles by measuring the time required for a certain amount of air to permeate through the particle packed bed and the pressure difference in this case", and unlike the BET method and the like, the specific surface area can be obtained from the viewpoint of air permeation resistance of the particle surface. Specifically, the specific surface area by the air permeation method can be measured by using a brane air permeation device according to the method described in JIS R 5201:2015.

The present inventors have found that the specific surface area obtained by the method for measuring the specific surface area by the air permeation method is extremely suitable for evaluating the fluidity of the polyethylene powder and thus the fillability.

In the polyethylene powder of the present embodiment, the specific surface area by air permeation method is 500 cm$^2$/g to 1000 cm$^2$/g, preferably 600 cm$^2$/g to 950 cm$^2$/g, more preferably 650 cm$^2$/g to 850 cm$^2$/g.

The specific surface area in the air permeation method being in the above range improves the fluidity and fillability of the polyethylene powder, and as a result, and the number of defects in the molded body and the porous sintered body is likely to be reduced. At the same time, the mechanical strength of the molded body and porous sintered body tends to be improved.

The polyethylene powder having a specific surface area determined by the air permeation method within the above numerical range has micrometer-level unevenness on the surface suppressed to a certain extent and has a particle shape close to a sphere.

The polyethylene powder of the present embodiment having a specific surface area determined by the air permeation method within the above numerical range can be obtained, for example, by the production method described below.

Specifically, the specific surface area of the polyethylene powder measured by the air permeation method can be controlled within the numerical range described above by adjusting the concentration of the catalyst starting material in the catalyst synthesis and the stirring rate during the catalyst synthesis, adjusting the temperature and pressure during the polymerization reaction of polyethylene, reducing the catalyst concentration in the slurry, feeding the catalyst in the vicinity of the stirring blade in the polymerization reactor, and adjusting the temperature, drying time, and the like in the drying step of the polyethylene powder after polymerization. More specifically, a solid catalyst having a structure in which active sites are uniformly distributed can be synthesized by lowering the concentration of starting materials during catalyst synthesis and gradually generating active sites. In addition, it is possible to obtain polyethylene powder particles that are free from distortion and have less unevenness on the surface by lowering the temperature and pressure during the polymerization reaction, reducing the concentration of catalyst in the slurry, and feeding the catalyst in the vicinity of the stirring blade in the polymerization reactor to gradually grow polyethylene polymer chains. Furthermore, in the drying step of polyethylene powder, application of the method of sufficiently removing the solvent at 100°C or less, followed by drying for 10 minutes or more at about 120°C, which is near the melting start temperature of polyethylene, is effective from the viewpoint of controlling the specific surface area of the polyethylene powder of the present embodiment by the air permeation method within the above described numerical range.

The polyethylene powder of the present embodiment having a specific surface area by the air permeation method described above can be obtained by the gradual growth of polymer chains on the catalyst and the slight melting of the polyethylene powder during the drying step as described above.

(Viscosity average molecular weight (Mv))

In the polyethylene powder of the present embodiment, the viscosity average molecular weight (Mv) is preferably from 100,000 to 10,000,000, more preferably from 3,000,000 to 9,000,000, and still more preferably from 4,500,000 to 8,500,000.

The viscosity average molecular weight of the polyethylene powder being 100,000 or more allows to provide a molded body having sufficient mechanical strength.

The viscosity average molecular weight of the polyethylene powder being 10,000,000 or less improves the melt fluidity of the polyethylene powder during molding processing, and tends to provide excellent molding processability. Therefore, the molded body using the polyethylene powder of the present embodiment has sufficient mechanical strength. In addition, the melt fluidity is further lowered during sintering molding, and the fusion bondability of adjoining polyethylene powders is improved, so that high air permeability tends to be maintained.

Examples of the method for controlling the viscosity average molecular weight (Mv) of polyethylene powder within the above described numerical range include a method of adjusting the temperature (polymerization temperature) in polymerizing ethylene. The viscosity average molecular weight tends to be lower with increasing the polymerization temperature, and the viscosity average molecular weight tends to be higher with decreasing the polymerization temperature.

Examples of another method for controlling the viscosity average molecular weight (Mv) within the numerical range described above include a method of adding a chain transfer agent such as hydrogen in polymerizing ethylene. Addition of the chain transfer agent tends to decrease the viscosity average molecular weight of the resulting polyethylene at the same polymerization temperature.

In order to set the viscosity average molecular weight (Mv) within the numerical range described above, it is preferable to control the viscosity average molecular weight (Mv) of polyethylene by combining the above methods.

The viscosity average molecular weight of polyethylene powder can be measured by the method described in examples below.

(Total content of Al, Ti, and Mg)

In the polyethylene powder of the present embodiment, the total content of Al, Ti, and Mg is preferably 1 ppm or more and 50 ppm or less, more preferably 3 ppm or more and 40 ppm or less, and still more preferably 5 ppm or more and 25 ppm or less.

The total content of Al, Ti, and Mg being 1 ppm or more allows to suppress the generation of fine powder and the generation of particle aggregates due to crushing and deformation of polyethylene powder, and allows to suppress the adhesion of polyethylene powder to the polymerization reactor, clogging of pipes, reduction in sieving efficiency, and the like.

Meanwhile, the total content of Al, Ti, and Mg being 50 ppm or less allows to suppress the deterioration of polyethylene due to heating, to result in little occurrence of embrittlement, discoloration, deterioration of mechanical properties, increase in an unmelted material amount, and the like, and to provide excellent long-term stability.

The total content of Al, Ti, and Mg in the polyethylene powder of the present embodiment can be controlled by adjusting the productivity of the polyethylene powder per unit catalyst. The productivity of polyethylene powder can be controlled by adjusting the polymerization temperature, polymerization pressure, and polyethylene slurry concentration of the polymerization reactor during production. Examples of the method for increasing the productivity of polyethylene powder include methods such as increasing the polymerization temperature, increasing the polymerization pressure, and increasing the polyethylene slurry concentration. The catalyst to be used is not particularly limited, and a general Ziegler-Natta catalyst can be used, but it is particularly preferable to use the catalyst described later.

The total content of Al, Ti, and Mg in the polyethylene powder can be measured by the method described in examples below.

(Porosity)

In the polyethylene powder of the present embodiment, the porosity is preferably 30% or more and 45% or less, more preferably 33% or more and 40% or less, and still more preferably 35% or more and 38% or less.
The porosity of polyethylene powder means "porosity of sample bed" described in JIS R 5201:2015.
The polyethylene powder of the present embodiment has a porosity of 30% or more and 45% or less, so that the amounts of different-shaped powders and powder aggregates are reduced, resulting in excellent fluidity. As a result, there is a good tendency for the handling of the polyethylene powder to be fed into a hopper or the like and to be weighed from the hopper.
Polyethylene powder with a porosity of 30% or more and 45% or less can be synthesized, for example, using a general Ziegler-Natta catalyst or metallocene catalyst, but it is particularly preferable to use the catalyst described below.
The porosity of polyethylene powder can be measured by the method described in examples below.

(Average particle size (D50))

The average particle size (D50) of the polyethylene powder of the present embodiment is preferably 100 μm or more and 300 μm or less, more preferably 110 μm or more and 250 μm or less, and still more preferably 120 μm or more and 200 μm or less.
The average particle size (D50) being 100 μm or more tends to sufficiently increase the bulk density and fluidity of the polyethylene powder, and tends to sufficiently improve the handleability such as feeding into a hopper and weighing from the hopper.
Meanwhile, the average particle size (D50) being 300 μm or less tends to increase the contact area between the polyethylene powders to further improve the mechanical strength of the molded body.
The average particle size (D50) of the polyethylene powder can be measured by the method described in examples below.
The average particle size (D50) of the ethylene polymer can be controlled by adjusting the catalyst particle size used, and can also be controlled by adjusting the productivity of the ethylene-based polymer per unit catalyst. For example, using catalyst particles with a large particle size can increase the average particle size of the polyethylene powder, and lowering the polymerization temperature can reduce the productivity to decrease the average particle size.

(Density)

In the polyethylene powder of the present embodiment, the density is preferably 900 kg/m$^3$ or more and less than 960 kg/m$^3$. The density is more preferably 910 kg/m$^3$ or more and less than 950 kg/m$^3$, and still more preferably 925 kg/m$^3$ or more and less than 940 kg/m$^3$.
The "density" is the density of the polyethylene itself that constitutes the polyethylene powder.
The density of the polyethylene powder of the present embodiment is set to 900 kg/cm$^3$ or more and less than 960 kg/cm$^3$, whereby the moldability tends to be excellent and the strength of the molded body tends to be high.
The density of the polyethylene powder can be measured by the method described in examples below.

[Method for producing polyethylene powder]

The polyethylene powder of the present embodiment is not limited to the following, and can be produced, for example, by a method of (co)polymerizing ethylene or a monomer containing ethylene by a slurry polymerization method, a gas phase polymerization method, or a solution polymerization method. In particular, the slurry polymerization method capable of efficiently removing the heat of polymerization is preferable. In the slurry polymerization method, for example, an inert hydrocarbon solvent can be used as a medium, and the olefin itself used for polymerization can also be used as a medium.

(Inert hydrocarbon solvent)

The inert hydrocarbon solvent is not limited to the following, and examples thereof include: an aliphatic hydrocarbon such as propane, butane, isobutane, pentane, isopentane, hexane, heptane, octane, decane, dodecane, and kerosene; an alicyclic hydrocarbon such as cyclopentane, cyclohexane, and methylcyclopentane; an aromatic hydrocarbon such as benzene, toluene, and xylene; a halogenated hydrocarbon such as ethyl chloride, chlorobenzene, and dichloromethane; and mixtures thereof.

As the inert hydrocarbon solvent, it is preferable to use an inert hydrocarbon solvent having 6 or more and 10 or less carbon atoms. If the number of carbon atoms is 6 or more, a low molecular weight component caused by a side reaction during ethylene polymerization and deterioration of polyethylene is relatively easily dissolved, and tends to be able to be easily removed in the step of separating the polyethylene and the polymerization solvent. Meanwhile, if the number of carbon atoms is 10 or less, adhesion of polyethylene powder to the polymerization reactor or the like is suppressed, and industrially stable operation tends to be possible.

(Polymerization temperature)

The polymerization temperature of polyethylene in the method for producing polyethylene powder of the present embodiment is generally preferably 30°C or more and 90°C or less, more preferably 35°C or more and 85°C or less, and still more preferably 40°C or more and 80°C or less. If the polymerization temperature is 30°C or more, industrially efficient production tends to be possible. Meanwhile, if the polymerization temperature is 90°C or less, continuously stable operation tends to be possible.

(Pressure)

The polymerization pressure of polyethylene in the method for producing polyethylene powder of the present embodiment is normally preferably normal pressure or more and 2.0 MPa or less, more preferably 0.1 MPa or more and 1.5 MPa or less, and still more preferably 0.1 MPa or more and 1.0 MPa or less.

(Method of polymerization reaction)

The polymerization reaction of the polyethylene powder of the present embodiment can be performed by any of a batch system, a semi-continuous system, and a continuous system, and the continuous system is particularly preferable. In the continuous system, ethylene gas, a solvent, a catalyst, and the like are continuously supplied into the polymerization system, and ethylene gas, the solvent, the catalyst, and the like are continuously discharged together with the polyethylene powder produced, thereby allowing to suppress a partial high temperature state due to a rapid reaction of ethylene, and the inside of the polymerization system is likely to be further stabilized.

In the method for producing polyethylene powder of the present embodiment, the polymerization of polyethylene can be performed in two or more stages with different reaction conditions.

(Catalyst component)

A catalyst component may be used in the production of the polyethylene powder of the present embodiment.

The catalyst component is not limited to the following, and suitable examples thereof include a Ziegler-Natta catalyst, a metallocene catalyst, and a Phillips catalyst.

As the Ziegler-Natta catalyst, for example, those described in Japanese Patent No. 5767202 can be preferably used. As the metallocene catalyst, for example, those described in Japanese Patent Laid-Open No. 2006-273977 and Japanese Patent No. 4868853 can be preferably used. In addition, the catalyst component used in the process for producing the polyethylene powder of the present embodiment may contain a co-catalyst such as triisobutylaluminum and a Tebbe reagent.

(Average particle size of catalyst)

In the production of the polyethylene powder of the present embodiment, the average particle size of the catalyst used for polyethylene polymerization is preferably 1 $\mu$m or more and 20 $\mu$m or less, more preferably 2 $\mu$m or more and 16 $\mu$m or less, still more preferably 5 $\mu$m or more and 12 $\mu$m or less.

The average particle size of the catalyst being 1 $\mu$m or more tends to allow preventing a problem such as scattering and adhesion of the obtained polyethylene powder. In addition, the average particle size of the catalyst being 20 $\mu$m or less tends to allow preventing the problem of, for example, settling in the polymerization system or line clogs in the post-treatment step of the polyethylene powder due to the polyethylene powder that becomes too large. A narrower particle size distribution of the catalyst is preferable, and the particle size distribution can be controlled by removing fine powders and coarse powders by sieving, centrifugation, or cyclone.

The particle size distribution of the catalyst can be controlled by removing fine powders and coarse powders by decantation, sieving, centrifugation, or cyclone. In particular, fine powders and coarse powders can be removed more effectively by using a centrifuge.

(Catalyst feed method)

The catalyst is preferably introduced into the liquid phase portion of the polymerization reactor in the direction of rotation of the stirring shaft. This facilitates the diffusion of the catalyst, and tends to suppress the deformation and distortion of the particles due to rapid polymerization.

(Solvent separation)

In the production of the polyethylene powder of the present embodiment, the polyethylene powder is separated from the solvent after the polymerization step. Examples of the solvent separation method include a decantation method, a centrifugal method, and a filter filtration method, and the centrifugal method is preferable from the viewpoint of high separation efficiency between the polyethylene powder and the solvent.

(Drying)

In the production of the polyethylene powder of the present embodiment, it is preferable to perform a drying treatment after separating the solvent.

The drying treatment is preferably performed within a range of $\pm 5°C$ of the melting point after removing the solvent sufficiently at the melting point or less of the polyethylene powder.

It is preferable that the drying temperature of the melting point or less is in two stages. For example, the first stage is at 60°C or more and 90°C or less, preferably 70°C or more and 80°C or less. In addition, the second stage is at 85°C or more and 115°C or less, preferably 95°C or more and 105°C or less.

The drying time at the melting point or less is not particularly limited, and from the viewpoint of suppressing thermal deterioration and aggregation, it is preferably 20 minutes or more and 90 minutes or less, more preferably 30 minutes or more and 60 minutes or less.

The drying time within the range of $\pm 5°C$ of the melting point is preferably 5 minutes or more and 30 minutes or less, more preferably 10 minutes or more and 20 minutes or less. The drying time being 5 minutes or more tends to smoothing cracks and unevenness on the surface of the polyethylene powder. In addition, the drying time being 30 minutes or less tends to allow drying the polyethylene powder while suppressing aggregation and heat deterioration.

The melting point of polyethylene powder can be measured as follows.

For example, it can be measured by using a "Perkin Elmer Pyris 1 DSC" as a differential scanning calorimeter (DSC). Under a reduced pressure environment of 0.1 to 0.5 kPa, 8.3 to 8.5 mg of polyethylene powder subjected to heat history at 110°C for 6 hours is used as a measurement sample, weighed with an electronic balance, and placed in an aluminum sample pan. The pan is fitted with an aluminum cover and placed in a differential scanning calorimeter. The sample and reference sample are held at 50°C for 1 minute with a nitrogen purge at a flow rate of 20 mL/min, then heated from 50°C to 180°C at a heating rate of 10°C/min, held at 180°C for 5 minutes, and then cooled at 10°C/min to 50°C. The baseline of the heating DSC curve obtained in this case is corrected, and the peak top calculated by the analysis software "Pyris software (version 7)" is measured as the melting point.

(Additive)

The polyethylene powder of the present embodiment can contain other known components useful for producing polyethylene powder, in addition to the components described above.

The polyethylene powder of the present embodiment may, for example, further contain an additive such as a neutralizer, an antioxidant, and a light stabilizer.

The neutralizer is used as a catcher of chlorine contained in the polyethylene powder, or as a processing aid. The neutralizer is not limited to the following, and examples thereof include a stearate of an alkaline earth metal such as calcium, magnesium, and barium. The content of the neutralizer is not particularly limited, and preferably 5,000 ppm or less, more preferably 4,000 ppm or less, still more preferably 3,000 ppm or less, relative to the total amount of polyethylene powder. From the viewpoint of preventing the elution of the additive when forming a molded body, the neutralizer is preferably not used.

The antioxidant is not limited to the following, and examples thereof include a phenolic-based antioxidant such as dibutylhydroxytoluene, pentaerystil-tetrakis[3-(3,5-di-t-butyl-4-hydroxyphenyl)propionate], and octadecyl-3-(3,5-di-t-butyl-4-hydroxyphenyl)propionate.

The content of the antioxidant is not particularly limited, and preferably 5,000 ppm or less, more preferably 4,000 ppm or less, still more preferably 3,000 ppm or less, relative to the total amount of polyethylene powder. It is possible that the antioxidant is not used.

The light stabilizer is not limited to the following, and examples thereof include: a benzotriazole-based light stabilizer such as 2-(5-methyl-2-hydroxyphenyl)benzotriazole and 2-(3-t-butyl-5-methyl-2-hydroxyphenyl)-5-chlorobenzotriazole; and a hindered amine light stabilizer such as bis(2,2,6,6-tetramethyl-4-piperidine)sebacate, and poly[{6-(1,1,3,3-tetramethylbutyl)amino-1,3,5-triazine-2,4-diyl}{(2,2,6,6-tetramethyl-4-piperidyl)imino}hexamethylene{(2,2,6,6-tetramethyl-4-piperidyl)imino}].

The content of the light stabilizer is not particularly limited, and preferably 5,000 ppm or less, more preferably 4,000 ppm or less, still more preferably 3,000 ppm or less, relative to the total amount of polyethylene powder. It is possible that the light stabilizer is not used.

(Blend)

The polyethylene powder of the present embodiment may be a blend of polyethylenes having different viscosity average molecular weights, molecular weight distributions, and the like, or may be a blend of low-density polyethylenes such as linear low-density polyethylenes.

Upon production of a molded body by using the polyethylene powder of the present embodiment, other resins such as polypropylene and polystyrene can be blended.

[Molded body]

The polyethylene powder of the present embodiment can be applied to various applications depending on various processing methods.

The molded body of the present embodiment can be produced by molding the polyethylene powder of the present embodiment. The molded body of the present embodiment has few defects, is uniform, and has excellent strength and dimensional accuracy, and thus can be suitably used as, for example, a material for microporous membranes, fibers, sheet-like or block-like molded bodies, and porous sintered bodies.

The molded body is not limited to the following, and examples thereof include a secondary battery separator, particularly a lithium-ion secondary battery separator, a lead-acid battery separator, a high-strength fiber, and a compression molded body.

Taking advantage of the excellent properties of ultra-high molecular weight polyethylene, such as wear resistance, sliding resistance, strength, and impact resistance, solid molding such as extrusion molding, press molding, and cutting can lead to applications such as a gear, a roll, a curtain rail, a rail for pachinko balls, a lining sheet for grain storage silos, a sliding coating material for rubber products, a ski plate material and ski sole, and a lining material for heavy machinery such as trucks and shovels.

The molded body obtained by sintering the polyethylene powder of the present embodiment can be used for, for example, a filter, a separation material, a trap material, and a suction conveying sheet.

Examples

Hereinafter, the present embodiment will be described in detail with reference to specific examples and comparative examples, but the present invention is not limited to the following examples and comparative examples.

The measurement method and evaluation method for various physical properties and characteristics are shown below.

[Method for measuring various physical properties]

(Volume fraction of particles having a particle size of 100 $\mu$m or less)

The volume fraction of particles having a particle size of 100 $\mu$m or less in the polyethylene powder measured by laser diffraction was measured by using a laser diffraction particle size distribution analyzer SALD-2300 (manufactured by Shimadzu Corporation).

Methanol was used as a dispersing medium, and an ultrasonic bath was used as a dispersing device.

(Specific surface area by air permeation method)

The specific surface area by the polyethylene powder air permeation method was measured by the method described in JIS R 5201:2015.

The true density of polyethylene was set to 0.93 kg/m$^3$.

(Viscosity average molecular weight (Mv))

The viscosity average molecular weight of the polyethylene powder was determined according to ISO1628-3 (2010) by the method shown below.

First, 20 mg of polyethylene powder was weighed into a melting tube, the melting tube was purged with nitrogen, then 20 mL of decahydronaphthalene (1 g/L of 2,6-di-t-butyl-4-methylphenol was added thereto) was added, and the mixture was stirred at 150°C for 2 hours to dissolve the polyethylene powder. This solution was placed in a constant temperature bath at 135°C, and using a Canon-Fenske viscometer (Product No.-100, manufactured by Shibata Kagaku Kikai Kogyo Co., Ltd.), the falling time (ts) between the marked lines was measured.

Similarly, the falling time (ts) between the marked lines was measured for samples with polyethylene powder of 10 mg, 5 mg, and 2.5 mg.

As a blank, the falling time (tb) of decahydronaphthalene without polyethylene powder was measured.

Each of the reduced viscosity ($\eta$sp/C) of the polyethylene powder obtained according to the following formula A was plotted to derive a linear expression between the concentration (C) (unit: g/dL) and the reduced viscosity ($\eta$sp/C) of the polyethylene powder, and the intrinsic viscosity ([$\eta$]) extrapolated to a concentration of 0 was obtained.

$$\eta\text{sp/C} = (\text{ts} / \text{tb} - 1) / 0.1 \ (\text{unit: dL/g}) \quad \text{Formula A}$$

Then, the viscosity average molecular weight (Mv) was calculated by using the value of the intrinsic viscosity [$\eta$] according to formula B below.

$$Mv = (5.34 \times 10^4) \times [\eta]1.49 \quad \text{Formula B}$$

(Total content of Al, Ti, and Mg)

The total content of magnesium, titanium, and aluminum elements in the polyethylene powder was calculated as follows.

Polyethylene powder was pressurized and decomposed by using a microwave decomposition device (model ETHOS TC, manufactured by Milestone General K. K.). Using ICP-MS (inductively coupled plasma mass spectrometer, model X series X7, manufactured by Thermo Fisher Scientific K. K.), the element concentration of each of magnesium, titanium, and aluminum was measured as a metal in the polyethylene powder by the internal standard method. The sum of the concentration was calculated.

(Porosity)

The porosity of polyethylene powder was measured by the method described in JIS R 5201:2015.

The "porosity of the sample bed" described in the method was taken as the porosity of the polyethylene powder.

(Average particle size (D50))

The average particle size of the polyethylene powder (D50) was measured by using a laser diffraction particle size distribution analyzer SALD-2300 (manufactured by Shimadzu Corporation).

Methanol was used as a dispersing medium, and an ultrasonic bath was used as a dispersing device.

(Density)

The density of polyethylene powder was measured according to JIS K 7112 by annealing a piece cut out from a press sheet of polyethylene powder at 120°C for 1 hour, then cooling it at 25°C for 1 hour, and using it as a sample for density measurement.

The press sheet of polyethylene powder was prepared according to ASTM D 1928 Procedure C using a mold having a length of 60 mm, a width of 60 mm, and a thickness of 2 mm.

(Specific surface area by BET method)

The specific surface area of polyethylene powder was measured by using Autosorb 3MP manufactured by Yuasa Ionics Co., Ltd.

As a pretreatment, 1 g of polyethylene powder was placed in a sample cell, and heated and degassed at 80°C and 0.01 mmHg or less for 12 hours using a sample pretreatment device. Then, the specific surface area was measured by the BET method under the condition of a measurement temperature of -196°C using nitrogen as the adsorption gas.

[Evaluation method for various characteristics]

(Powder feedability)

The powder feedability was evaluated by the number of defects when a porous continuous sintered sheet was formed.

0.3 parts by mass of polyoxysorbitan monolaurate was added to 100 parts by mass of polyethylene powder and mixed with a blender to provide a polyethylene powder composition. The polyethylene powder composition was put into a hopper, and the roller under the hopper was rotated at a moving speed (circumference) of 9.5 cm/min to feed the polyethylene powder composition.

The hopper had a horizontal length of 1800 mm, a vertical length of 15 mm, and a height of 450 mm. The upper portion thereof extended by 500 mm at an inclination of 45 degrees toward the direction of movement and by 500 mm at an inclination of 45 degrees toward the front side. The fed polyethylene powder composition was deposited so as to have a thickness of 0.505 mm on an endless metal conveyor belt rotating at a moving speed of 10 cm/min.

Then the polyethylene powder was passed for 10 minutes through a heating zone set at 200°C. The resin temperature at the exit of the heating zone was 190°C.

Subsequently, the polyethylene powder was compressed at a compression rate of 1% with a compression roller having the temperature adjusted to 140°C.

After 15 seconds from the compression with the roller, the resultant was separated from the endless conveyor belt, air-cooled from both sides, and wound around a roll to provide a porous sintered body.

Subsequently, the original sheet of the porous sintered body was pressed at 95°C with a formwork thickness of 0.500 mm at 1 MPa for 90 seconds, thereby providing a sheet of a porous sintered body having a thickness of 0.501 mm.

The resultant sheet was cut into 90 cm squares, and the number of defects having a major axis of 1.5 mm or more per sheet was counted by using a loupe with a gauge. The average value of the number of defects in the five sheets was calculated, and powder feedability, that is, fluidity and fillability, was evaluated according to the following criteria.

○: 3 pieces or less
△: 4 pieces or more and 8 pieces or less
✕: 9 pieces or more

(Air permeability)

Using the sheet of the porous sintered body prepared in the evaluation as described above (powder feedability) as a sample for measurement, and an air permeability measuring machine ("FX3360 PORTAIR" manufactured by Textest AG), the air permeability of the polyethylene powder was measured under conditions of a measurement range of 20 $cm^2$ and a measurement differential pressure of 125 Pa, and evaluated based on the following criteria.

◎ : Air permeability was 8 $cm^3/cm^2/sec$ or more

○ : Air permeability was 6 $cm^3/cm^2/sec$ or more and less than 8 $cm^3/cm^2/sec$

△ : Air permeability was 4 $cm^3/cm^2/sec$ or more and less than 6 $cm^3/cm^2/sec$

✕ : Air permeability was less than 4 $cm^3/cm^2/sec$

(Tensile breaking stress of porous sintered body)

The tensile breaking stress of the polyethylene powder was measured by using the porous sintered sheet prepared in the evaluation described above (powder feedability) as a measurement sample.

The average value of the measurement values at 10 times using Tensilon RTC-1310A manufactured by A&D Co., Ltd. in accordance with JIS K 7161-1 was taken as the tensile breaking strength.

◎ indicates that the tensile breaking strength was 6.5 MPa or more.

○ indicates that the tensile breaking strength was 5.5 MPa or more and less than 6.5 MPa.

△ indicates that the tensile breaking strength was 4.5 MPa or more and less than 5.5 MPa.

× indicates that the tensile breaking strength was less than 4.5 MPa.

(Defect of molded body)

9 kg of polyethylene powder was fed into a mold of 300 mm square and 100 mm in height in a heat press molding machine by gravity, then was evenly surface-smoothed, was compression molded at a set temperature of 180°C and a gauge pressure of 8 MPa for 3 hours, and then was cooled by stopping heating while the pressure was maintained to provide a molded body.

Three cross-sections were observed with a 5-fold magnifying glass.

The number of void defects in the cross section of the molded body was counted and evaluation was performed based on the following criteria.

◎: The total number of white spots in the three cross sections is 0.

○: The total number of white spots in the three cross sections is 1.

△: The total number of white spots in the three cross sections is 2.

×: The total number of white spots in the three cross sections is 3 or more.

(Tensile breaking stress of molded body)

160 g of polyethylene powder was press molded by using a metal spacer having a thickness of 4 mm and an inner dimension of 200 mm square.

After compression at 180°C and a gauge pressure of 4 MPa for 5 minutes, compression was maintained at 8 MPa for 30 minutes.

Then, cooling to 25°C at 15°C/min provided a molded body.

Using the molded body as a sample, the tensile breaking strength was measured by using a tensile tester RTC-1310A manufactured by Orientec Co., Ltd. in accordance with JIS K 7127: 1999 at a test piece type 5 and a test speed of 500 mm/min to evaluate the tensile breaking stress.

From the obtained breaking stress, the strength was evaluated as follows.

◎: Breaking stress was 45 MPa or more.

○: Breaking stress was 35 MPa or more and less than 45 MPa.

△: Breaking stress was 25 MPa or more and less than 35 MPa.

×: Breaking stress was less than 25 MPa.

[(Production Example) Synthesis of catalyst component]

(Catalyst Component Synthesis Example 1: Preparation of solid catalyst component [A])

<(1) (A-1) Synthesis of carrier>

To an 8L stainless steel autoclave sufficiently purged with nitrogen, 1,000 mL of a hexane solution of 2 mol/L hydroxytrichlorosilane was charged. While stirring at 65°C, 2,550 mL of a hexane solution of an organomagnesium compound (equivalent to 2.68 mol of magnesium) represented by the composition formula $AlMg_5(C_4H_9)_{11}(OC_4H_9)_2$ was added dropwise thereto for 4 hours. The reaction was further continued with stirring at 65°C for one hour.

After completion of the reaction, the supernatant was removed and washed four times with 1,800 mL of hexane.

As a result of analyzing this solid ((A-1) carrier), the amount of magnesium contained per 1 g of the solid was 8.31 mmol.

**<(2) Preparation of solid catalyst component [A]>**

While stirring 1,970 mL of a hexane slurry containing 110 g of the carrier (A-1) at 10°C, 110 mL of a hexane solution of 1.2 mol/L titanium tetrachloride and 110 mL of a hexane solution of the 1 mol/L organomagnesium compound used in the synthesis of the carrier (A-1) were added simultaneously thereto for 1 hour.

After the addition, the reaction was continued for one hour at 10°C.

After completion of the reaction, 1,100 mL of the supernatant was removed and washed twice with 1,100 mL of hexane to prepare a solid catalyst component [A].

The amount of titanium contained in 1 g of this solid catalyst component [A] was 0.85 mmol.

(Catalyst Component Synthesis Example 2: Preparation of solid catalyst component [B])

**<Preparation of solid catalyst component [B]>**

To an 8L stainless steel autoclave sufficiently purged with nitrogen, 1600 mL of hexane was added. While stirring at 10°C, 800 mL of a hexane solution of 1 mol/L titanium tetrachloride and 800 mL of a hexane solution of a1 mol/L organomagnesium compound represented by the composition formula $AlMg_5(C_4H_9)_{11}(OSiH)_2$ were added thereto periodically at an interval of 5 minutes. In this way, the addition and stop of the addition were repeated for 4 hours. After the addition, the temperature was gradually increased, and the reaction was continued for one hour at 60°C.

After completion of the reaction, 1600 mL of the supernatant was removed and washed 5 times with 1600 mL of hexane to provide a catalyst component.

The resultant catalyst component was separated and removed by using a rotating rotor classifier iClasifier manufactured by Satake Chemical Machinery Industry Co., Ltd. until the occupancy of catalyst particles having a particle size of 3 μm or less became 5% or less, thereby preparing a solid catalyst component [B].

The amount of titanium contained in 1 g of this solid catalyst component [B] was 3.05 mmol.

(Catalyst Component Synthesis Example 3: Preparation of solid catalyst component [V])

**<Preparation of solid catalyst component [V]>**

While stirring 1,970 mL of a hexane slurry containing 110 g of the carrier (A-1) at 10°C, 110 mL of a hexane solution of 0.4 mol/L titanium tetrachloride and 110 mL of a hexane solution of the 0.5 mol/L organomagnesium compound used in the synthesis of the carrier (A-1) were added simultaneously thereto for 1 hour.

After the addition, the reaction was continued for one hour at 10°C.

After completion of the reaction, 1,100 mL of the supernatant was removed and washed 2 times with 1,100 mL of hexane to provide a catalyst.

The resultant catalyst component was separated and removed by using a rotating rotor classifier iClasifier manufactured by Satake Chemical Machinery Industry Co., Ltd. until the occupancy of catalyst particles having a particle size of 3 μm or less became 5% or less, thereby preparing a solid catalyst component [V].

The amount of titanium contained in 1 g of this solid catalyst component [V] was 0.45 mmol.

(Catalyst Component Synthesis Example 4: Preparation of solid catalyst component [W])

A solid catalyst component [W] was obtained in the same manner as in (Catalyst Component Synthesis Example 3) described above, except that the fine catalyst was washed with 1,100 mL of hexane five times instead of removing the fine catalyst with a rotating rotor.

(Catalyst Component Synthesis Example 5: Preparation of solid catalyst component [X])

A solid catalyst component [X] was obtained in the same manner as in (Catalyst Component Synthesis Example 3) described above, except that the rotating rotor was not used and additional hexane washing was not performed.

(Catalyst Component Synthesis Example 6: Preparation of solid catalyst component [Y])

**<(1) Synthesis of starting material (y-1)>**

To an 8L stainless steel autoclave sufficiently purged with nitrogen, 2,000 mL of a hexane solution of 1 mol/L $Mg_6(C_4H_9)_{12}Al(C_2H_5)_3$ (equivalent to 2000 mmol of magnesium and aluminum) was charged. While stirring at 50°C, 146 mL of a hexane solution of 5.47 mol/L n-butanol was added dropwise thereto for 3 hours. After completion of the addition, the lines were washed with 300 mL of hexane.

Furthermore, stirring was continued at 50°C for 2 hours.

After the reaction was completed, the resultant solution cooled to room temperature was regarded as a starting material (y-1).

The starting material (y-1) had a magnesium concentration of 0.704 mol/L.

<(2) Synthesis of starting material (y-2)>

To an 8L stainless steel autoclave sufficiently purged with nitrogen, 2,000 mL of a hexane solution of 1 mol/L $Mg_6(C_4H_9)_{12}Al(C_2H_5)_3$ (equivalent to 2000 mmol of magnesium and aluminum) was charged. While stirring at 80°C, 240 mL of a hexane solution of 8.33 mol/L methyl hydrogen polysiloxane (manufactured by Shin-Etsu Chemical Co., Ltd.) was added dropwise thereto for 3 hours. After completion of the addition, the lines were washed with 300 mL of hexane. Furthermore, stirring was continued at 80°C for 2 hours.

After the reaction was completed, the resultant solution cooled to room temperature was designated as a starting material (y-2).

The starting material (y-2) had a total concentration of magnesium and aluminum of 0.786 mol/L.

<(3) Synthesis of carrier (Y-1)>

To an 8L stainless steel autoclave sufficiently purged with nitrogen, 1,000 mL of a hexane solution of 1 mol/L hydroxytrichlorosilane was charged. At 65°C, 1340 mL of a hexane solution of an organomagnesium compound (equivalent to 943 mmol of magnesium) of the starting material (y-1) was added dropwise thereto for 3 hours. The reaction was further continued with stirring at 65°C for one hour. After completion of the reaction, the supernatant was removed and washed four times with 1,800 mL of hexane to provide a carrier (Y-1). As a result of analyzing this carrier, the amount of magnesium contained per 1 g of the solid was 7.5 mmol.

<(4) Preparation of solid catalyst component [Y]>

To 1,970 mL of a hexane slurry containing 110 g of the (Y-1) carrier, 82 mL of a hexane solution of 0.8 mol/L titanium tetrachloride and 105 mL of the starting material (y-2) were simultaneously added for 3 hours while stirring at 25°C. After the addition, the temperature was increased to 40°C and the reaction was continued for one hour.

After completion of the reaction, the supernatant was removed and the residue was washed six times with hexane to remove unreacted starting material components, thereby preparing a solid catalyst component [Y].

[Production of polyethylene powder]

(Example 1)

Hexane, ethylene, hydrogen, and a catalyst were continuously fed to a vessel-type 300 L polymerization reactor equipped with a stirrer. The polymerization temperature was maintained at 65°C by jacket cooling. Hexane was supplied at 40 L/hr.

Triisobutylaluminum and the solid catalyst component [V] were used as promoters. The solid catalyst component [V] was introduced into the liquid phase portion at a rate of 0.1 g/hr from the vicinity of the stirring blade in the direction of rotation. Triisobutylaluminum was supplied at a rate of 5 mmol/hr from the opposite side of the solid catalyst component in the liquid phase through the shaft interposed therebetween.

The production rate of the ethylene polymer was 4.8 kg/hr.

Hydrogen was continuously supplied by a pump so that the hydrogen concentration relative to ethylene in the gas phase was 5 mol%, and the polymerization pressure was maintained at 0.5 MPa by continuously supplying ethylene.

The catalytic activity was 25,000 g-PE/g-solid catalyst component [V].

The polymerization slurry was continuously discharged into a flash drum at a pressure of 0.05 MPa so that the level in the polymerization reactor was maintained to be constant, and unreacted ethylene and hydrogen were separated.

The polymerized slurry was continuously sent to the drying step through the solvent separation step.

The drying step was performed at 70°C for 30 minutes, followed by 100°C for 20 minutes, and 140°C for 10 minutes.

There was no lump of polymer, and the pipe for discharging slurry was not clogged, and thus stable continuous operation was possible.

The obtained polyethylene powder was passed through a sieve with an opening of 425 μm, and the powder

that did not pass through the sieve was removed.

The polyethylene powder obtained as described above was designated as PE-1.

[Example 2]

Using the solid catalyst component [W] as the solid catalyst component, 1-butene was introduced from the gas phase at 5 mol% relative to ethylene, and the drying step was performed at 70 °C for 30 minutes, followed by 100°C for 10 minutes, and 140°C for 20 minutes. Other conditions were the same as in Example 1 to provide polyethylene powder: PE-2.

[Example 3]

The solid catalyst component [X] was used as the solid catalyst component. Other conditions were the same as in Example 1 to provide polyethylene powder: PE-3.

[Example 4]

The solid catalyst component [A] was used as the solid catalyst component, and the polymerization temperature was set to 75°C. Other conditions were the same as in Example 1 to provide polyethylene powder: PE-4.

[Example 5]

For the position at which the solid catalyst component was charged, it was charged at an upper portion from the slurry. Other conditions were the same as in Example 1 to provide polyethylene powder: PE-5.

[Example 6]

The feed rate of the solid catalyst component was set to 0.22 g/hr, and the drying step was performed at 70°C for 30 minutes and then at 100°C for 30 minutes. Other conditions were the same as in Example 1 to provide polyethylene powder: PE-6.

[Example 7]

The polymerization pressure was set at 0.37 MPa. Other conditions were the same as in Example 1, and polymerization was performed in the first-stage vessel-type polymerization reactor to provide a polymer slurry.

The polymer slurry solution was led to a flash drum with an internal volume of 300 L at a pressure of 0.04 MPa, and unreacted ethylene and hydrogen were separated. Then, the polymer slurry solution was introduced into the second-stage vessel-type 300 L polymerization reactor similar to that of Example 1 with a slurry pump. Hexane was introduced into the slurry pump at a rate of 95 L/h.

In the second-stage polymerization reactor, triethylaluminum was supplied at 35 mmol/hr under conditions of a temperature of 50°C and a pressure of 0.38 MPa, and ethylene and 5.2 mol% of 1-butene relative to ethylene were introduced thereto to polymerize the high-molecular-weight component so that the ratio of the mass of high-molecular-weight component produced in the second-stage polymerization reactor to sum of the mass of the high-molecular-weight component produced in the first-stage polymerization reactor and the mass of low-molecular-weight component produced in the second-stage polymerization reactor (mass of high-molecular-weight component produced in the second-stage polymerization reactor / (mass of high-molecular-weight component produced in the first-stage polymerization reactor + mass of low-molecular-weight component produced in the second-stage polymerization reactor) became 0.50.

Thereafter, the resultant solution was discharged into a flash drum in the same manner as in Example 1, unreacted ethylene and hydrogen were separated, and the resultant solution was subjected to a drying step to provide polyethylene powder: PE-7.

[Example 8]

Polymerization was performed in the same manner as in Example 1, and simultaneously polymerization was performed in the same manner as in Example 4 in the same type of the reactor.

Each polymerization slurry was continuously introduced into a stirrer having an internal volume of 300 L and a pressure of 0.04 MPa so that the level of the polymerization reactor was maintained to be constant, and the polymerization slurry was stirred while unreacted ethylene and hydrogen were separated.

Thereafter, the resultant solution was discharged into a flash drum in the same manner as in Example 1, unreacted ethylene and hydrogen were separated, and the resultant solution was subjected to a drying step to provide polyethylene powder: PE-8.

[Comparative Example 1]

The feed rate of the solid catalyst component [A] was set to 0.2 g/hr, the feed rate of triisobutylaluminum as a promoter was set to 10 mmol/hr, the polymerization temperature was set to 83°C, and the drying was set to 90°C. Other conditions were the same as in Example 4 to provide polyethylene powder: PE-9.

[Comparative Example 2]

The polymerization temperature was 65°C, and the drying step was performed at 70°C for 30 minutes, then at 100°C for 20 minutes, and at 140°C for 10 minutes. Other conditions were the same as in Comparative Example 1 to provide polyethylene powder: PE-10.

[Comparative Example 3]

Hexane, ethylene, hydrogen, and a solid catalyst component were continuously fed to a vessel-type 300 L polymerization reactor equipped with a stirrer. The polymerization pressure was 0.5 MPa. The polymerization temperature was maintained at 75°C by jacket cooling. Hexane was fed from the bottom of the polymerization reactor at 40 L/hr.
The solid catalyst component [B] was used as the solid catalyst, and triisobutylaluminum was used as the promoter. The solid catalyst component [B] was added to the polymerization reactor at a rate of 0.2 g/hr, and triisobutylaluminum was added to the polymerization reactor at a rate of 10 mmol/hr.
The production rate of the ethylene polymer was 7.6 kg/hr.
Hydrogen was continuously fed by a pump so that the concentration of hydrogen in the gas phase relative to ethylene became 3 mol%. Hydrogen was fed from the solid catalyst introduction line in order to previously contact the solid catalyst, and ethylene was fed from the bottom of the polymerization reactor.
The catalytic activity was 29000 g-PE/g-solid catalyst component [B].
The polyethylene slurry was continuously discharged into a flash drum at a pressure of 0.05 MPa and a temperature of 70°C so that the level in the polymerization reactor was maintained to be constant, and unreacted ethylene and hydrogen were separated.
The polymerized slurry was continuously sent to the drying step through the solvent separation step. The drying step was performed at 85°C for 30 minutes.
There was no lump of polymer, and the pipe for discharging slurry was not clogged, and thus stable continuous operation was possible.
The obtained polyethylene powder was passed through a sieve with an opening of 425 μm, and the powder that did not pass through the sieve was removed.
As described above, the polyethylene powder: PE-11 was obtained.

[Comparative Example 4]

The feed rate of the solid catalyst component [Y] was set to 0.16 g/hr, the polymerization temperature was set to 74°C, and the polymerization pressure was set to 0.45 MPa. Other conditions were the same as in Comparative Example 1 to provide polyethylene powder: PE-12.

[Comparative Example 5]

The feed rate of the solid catalyst component [Y] was set to 2 g/hr, the feed rate of triisobutylaluminum was set to 2.3 mmol/hr, the polymerization pressure was set to 0.3 MPa, and the concentration of hydrogen relative to ethylene in the gas phase was set to 11 mmol%. The drying step was performed at 105°C for 30 minutes. Other conditions were the same as in Comparative Example 3 to provide polyethylene powder: PE-13.

[Comparative Example 6]

Hexane, ethylene, hydrogen, and a catalyst were continuously fed to a vessel-type 300 L polymerization reactor equipped with a stirrer. The polymerization pressure was set to 0.5 MPa. The polymerization temperature was maintained at 85°C by jacket cooling. Hexane was fed from the bottom of the polymerization reactor at 40 L/hr.

The solid catalyst component [Y] was used as the solid catalyst, and triisobutylaluminum was used as the promoter.

The solid catalyst component [Y] was added at a rate of 0.2 g/hr from a middle point between the liquid surface and the bottom of the polymerization reactor, and triisobutylaluminum was added at a rate of 10 mmol/hr from a middle point between the liquid surface and the bottom of the polymerization reactor.

The solid catalyst component [Y] and a mixture of triisobutylaluminum and diisobutylaluminum hydride (9:1 mixture) as promoters were intermittently and alternately charged, and adjustment was performed so that the both were in contact with each other at the moment the both were charged into the reactor.

The production rate of the ethylene polymer was 10 kg/hr.

Hydrogen was continuously fed by a pump so that the concentration of hydrogen in the gas phase relative to ethylene became 5.5 mol%. Hydrogen was fed from the solid catalyst introduction line in order to previously contact the solid catalyst, and ethylene was fed from the bottom of the polymerization reactor.

The catalytic activity was 80,000 g-PE/g-solid catalyst component [Y].

The polymerization slurry was continuously discharged into a flash drum at a pressure of 0.05 MPa and a temperature of 70°C so that the level in the polymerization reactor was maintained to be constant, and unreacted ethylene and hydrogen were separated.

Then, the polymerization slurry was continuously sent to a centrifugal separator so as to maintain the level of the polymerization reactor constant, thereby separating the polymer and the solvent other than the polymer.

The separated polyethylene powder was dried at 85°C for 60 minutes while blowing nitrogen. In this drying step, the powder after polymerization was sprayed with steam to deactivate the catalyst and promoter.

Thereafter, the powder was passed through a sieve with an opening of 425 μm, and the material that did not pass through the sieve was removed to provide polyethylene powder: PE-14.

[Table 1]

| | | Example 1 | Example 2 | Example 3 | Example 4 | Example 5 | Example 6 | Example 7 | Example 8 | Comparative Example 1 | Comparative Example 2 | Comparative Example 3 | Comparative Example 4 | Comparative Example 5 | Comparative Example 6 |
|---|---|---|---|---|---|---|---|---|---|---|---|---|---|---|---|
| Volume fraction of particles having a particle size of 100μm or less | % | 13 | 10 | 24 | 17 | 5 | 16 | 8 | 10 | 31 | 22 | 34 | 28 | 33 | 35 |
| Specific surface area (air permeation method) | cm2/g | 739 | 510 | 915 | 960 | 897 | 860 | 612 | 744 | 1,200 | 1,140 | 912 | 1,040 | 634 | 778 |
| Viscosity average molecular weight [$\times 10^4$] | - | 500 | 560 | 390 | 250 | 310 | 250 | 690 | 400 | 270 | 280 | 185 | 415 | 98 | 200 |
| Total content of Mg, Ti, and Al | ppm | 9 | 12 | 40 | 23 | 28 | 35 | 36 | 18 | 25 | 8 | 31 | 6 | 32 | 11 |
| Porosity | % | 39 | 35 | 33 | 38 | 46 | 40 | 37 | 36 | 46 | 44 | 40 | 30 | 36 | 38 |
| Average particle size D50 (laser) | μm | 120 | 144 | 88 | 105 | 168 | 97 | 132 | 121 | 120 | 136 | 88 | 90 | 133 | 110 |
| Density | kg/m3 | 934 | 936 | 935 | 940 | 928 | 942 | 932 | 933 | 932 | 938 | 939 | 928 | 944 | 927 |
| Specific surface area (BET method) | m2/g | 0.23 | 0.26 | 0.37 | 0.33 | 0.41 | 0.45 | 0.52 | 0.30 | 0.34 | 0.33 | 0.20 | 0.45 | 0.26 | 0.52 |
| Porous sintered body — Powder feedability | | ○ | ○ | Δ | Δ | ○ | ○ | ○ | ○ | Δ | × | Δ | × | Δ | Δ |
| Porous sintered body — Air permeability | | ○ | ◎ | Δ | ○ | ◎ | ○ | ◎ | ◎ | × | ○ | × | × | ○ | Δ |
| Porous sintered body — Tensile breaking stress | | ◎ | ○ | Δ | ○ | ○ | ○ | ◎ | ◎ | × | Δ | × | Δ | Δ | × |
| Molded body — Defect | - | ◎ | ○ | ◎ | ◎ | ◎ | ◎ | ◎ | ◎ | × | ○ | × | Δ | ○ | Δ |
| Molded body — Tensile breaking stress | | ◎ | ○ | ○ | Δ | ○ | ◎ | ◎ | ◎ | × | Δ | Δ | Δ | Δ | Δ |

Industrial Applicability

The polyethylene powder of the present invention has industrial applicability as a material such as a secondary battery separator, particularly a lithium-ion secondary battery separator, a lead-acid battery separator, a high-strength fiber, a compression molded bodies, a gear, a roll, a curtain rail, a rail for pachinko balls, a lining sheet for grain storage silos, a sliding coating material for rubber products, a ski plate material and ski sole, a lining material for heavy machinery such as trucks and shovels, a filter, a separation material, a trap material, and a suction conveying sheet.

**Claims**

1.  A polyethylene powder, wherein

    a volume fraction of particles having a particle size of 100 $\mu$m or less measured by laser diffraction is 5 to 25%, and
    a specific surface area by an air permeation method is 500 $cm^2$/g to 1000 $cm^2$/g.

2.  The polyethylene powder according to claim 1, wherein a viscosity average molecular weight is 100,000 to 10,000,000.

3.  The polyethylene powder according to claim 1, wherein a total content of Al, Ti, and Mg is 1 ppm to 50 ppm.

4.  The polyethylene powder according to claim 1, wherein a porosity is 30% to 45%.

5.  The polyethylene powder according to claim 1, wherein an average particle size is 100 $\mu$m to 300 $\mu$m.

6.  A molded body of the polyethylene powder according to any one of claims 1 to 5.

Europäisches
Patentamt

European
Patent Office

Office européen
des brevets

# EUROPEAN SEARCH REPORT

**Application Number**

EP 23 16 3681

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 109 422 918 A (ASAHI CO LTD) 5 March 2019 (2019-03-05) * paragraphs [0015], [0018], [0077]; claims 1, 2; examples 1-5; preparation 1-4; table 1 * | 1-6 | INV. C08F110/02 C08F210/16 |
| X | JP 2017 145306 A (ASAHI KASEI CORP) 24 August 2017 (2017-08-24) * claims 1-3, 5 * | 1-6 | |
| X | WO 2021/079840 A1 (ASAHI CHEMICAL IND [JP]) 29 April 2021 (2021-04-29) * the whole document * | 1-6 | |
| X,P | & EP 4 050 043 A1 (ASAHI CHEMICAL IND [JP]) 31 August 2022 (2022-08-31) * paragraph [0076]; claims 1, 6; example 5; table 1 * | 1-6 | |

TECHNICAL FIELDS
SEARCHED        (IPC)

C08F

The present search report has been drawn up for all claims

| Place of search | Date of completion of the search | Examiner |
|---|---|---|
| Munich | 9 August 2023 | Bernhardt, Max |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 16 3681

This annex lists the patent family members relating to the patent documents cited in the above-mentioned European search report.
The members are as contained in the European Patent Office EDP file on
The European Patent Office is in no way liable for these particulars which are merely given for the purpose of information.

09-08-2023

| Patent document cited in search report | | Publication date | Patent family member(s) | | Publication date |
|---|---|---|---|---|---|
| CN 109422918 | A | 05-03-2019 | CN | 109422918 A | 05-03-2019 |
| | | | JP | 6514743 B2 | 15-05-2019 |
| | | | JP | 2019038931 A | 14-03-2019 |
| | | | KR | 20190022354 A | 06-03-2019 |
| JP 2017145306 | A | 24-08-2017 | JP | 6892737 B2 | 23-06-2021 |
| | | | JP | 2017145306 A | 24-08-2017 |
| WO 2021079840 | A1 | 29-04-2021 | CN | 114051503 A | 15-02-2022 |
| | | | EP | 4050043 A1 | 31-08-2022 |
| | | | JP | 7259073 B2 | 17-04-2023 |
| | | | JP | WO2021079840 A1 | 29-04-2021 |
| | | | KR | 20220024727 A | 03-03-2022 |
| | | | US | 2022372258 A1 | 24-11-2022 |
| | | | WO | 2021079840 A1 | 29-04-2021 |

EPO FORM P0459

For more details about this annex : see Official Journal of the European Patent Office, No. 12/82

**EP 4 249 529 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015120784 A
- WO 2020171017 A
- JP 2019038931 A
- WO 2008013144 A
- JP 5767202 B
- JP 2006273977 A
- JP 4868853 B